# EUROPEAN PATENT SPECIFICATION

(11) **EP 0 460 227 B1**
(45) Date of publication and mention of the grant of the patent: **13.09.1995**
(21) Application number: 91900926.6
(22) Date of filing: 14.12.1990
(51) Int. Cl.: G05B 19/421

(54) **ADDITIONAL SHAFT FOLLOW-UP CONTROL SYSTEM OF ROBOT**
NACHFOLGESTEUERUNGSSYSTEM FÜR EINE ZUSÄTZLICHE ROBOTERACHSE
SYSTEME D'ASSERVISSEMENT DE POURSUITE D'ARBRE ADDITIONNEL POUR ROBOT

(30) Priority: 25.12.1989 JP 335833/89
(43) Date of publication of application: 11.12.1991
(73) Proprietor: FANUC LTD., Minamitsuru-gun, Yamanashi 401-05 (JP)
(72) Inventor: HARA, Ryuichi, c/o FANUC Mansion Harimomi 7-206, Minamitsuru-gun, Yamanashi 401-05 (JP)
(74) Representative: Flint, Adam
(86) International application number: PCT/JP90/01645
(87) International publication number: WO 91/09710

(56) References cited:
- EP-A- 0 172 486
- DE-A- 2 712 811
- JP-A-60 193 016
- JP-A-60 246 407
- JP-A-61 281 305
- US-A- 4 831 547
- US-A- 4 836 742
- MICROPROCESSORS AND MICROSYSTEMS,vol. 8, no. 5, June 1984,WHITSTABLE,KENT ,GB pages 245 - 248; RICHARD WESTON: 'robot workplaces'

## Description

The present invention relates to a method of controlling a robot with a supplementary axis, whereby a robot is controlled by following a supplementary axis, and more particularly, to a method of controlling a robot with a supplementary axis, whereby the robot is automatically moved in response to a manual jog-run of the supplementary axis.

In a welding robot or the like, a table on which a workpiece is fixed is designed to rotate or move in a direction perpendicular to such a rotation, the table is controlled by a supplementary axis control circuit incorporated in a robot control unit, and this facilitates the control of the posture of the robot when performing a welding or other machining.

If, however, the table is jogged by the hand, the position and posture of a torch of the welding robot and the work on the table are changed, and therefore, it is necessary to give an instruction to adjust the position and posture of an arm of the robot accordingly, to thus maintain a constant position and posture. Such an instruction however, cannot be easily given in a conventional robot, as it requires much time and a complicated teaching procedure.

The object of the present invention is to solve the above problem and provide a method of controlling a robot with a supplementary axis, to thereby cause the robot to automatically follow a manual feed of the supplementary axis.

EP-A-0172486 discloses a tracking robot apparatus for maintaining unchanged the relative position/posture between a robot and a workpiece fixed on a movable device.

According to the present invention, there is provided a method of controlling a robot having a supplementary moving device which has a supplementary coordinate system with supplementary axes, the robot having a tool center point (TCP), the supplementary axes having a first position and posture and the tool center point having a second position and posture, there being a first coordinate change matrix from the supplementary axes to the tool center point, the method comprising the steps of:
(a) manually moving the supplementary moving device, thus moving the supplementary axes; and,
(b) subsequently reading the resulting coordinate position of the supplementary axes; characterised by:
(c) determining the coordinates and the posture of the tool center point, such that the position and posture of the supplementary axes relative to the position and posture of the tool center point is the same before and after step (a), by the following equations:$\text{R = B⁻¹AP}$ and$\text{P = B,}$ where
   B is the first coordinate change matrix,
   B⁻¹ is the inverse matrix of the matrix B,
   A is a second coordinate change matrix in accordance with the manual movement of the supplementary axes, and
   R is a third coordinate change matrix in accordance with the required movement of the tool center point; and,
(d) moving the tool center point in accordance with the coordinate and the posture determined in step (c).

When the supplementary axis such as a table is moved by hand, the resulting new coordinate position is read through a supplementary axis control circuit, a position and coordinates of the tool centre point that correspond to such a movement are determined by a microprocessor which controls the robot, and the arm of the robot is positioned in accordance with the new position and coordinates of the tool centre point. This makes it possible to maintain a constant position and posture relationship between the supplementary axis such as a table and the tool centre point.

In the drawings:
FIG. 1 is a flowchart of the method of controlling a robot with a supplementary axis according to the present invention;
FIG. 2 is a configuration diagram of a robot system for implementing the present invention; and
FIG. 3 is a diagram which shows the relationship between the tool centre point (TCP) and the coordinate system of the supplementary axis.

One embodiment of the present invention will now be described with reference to the drawings.

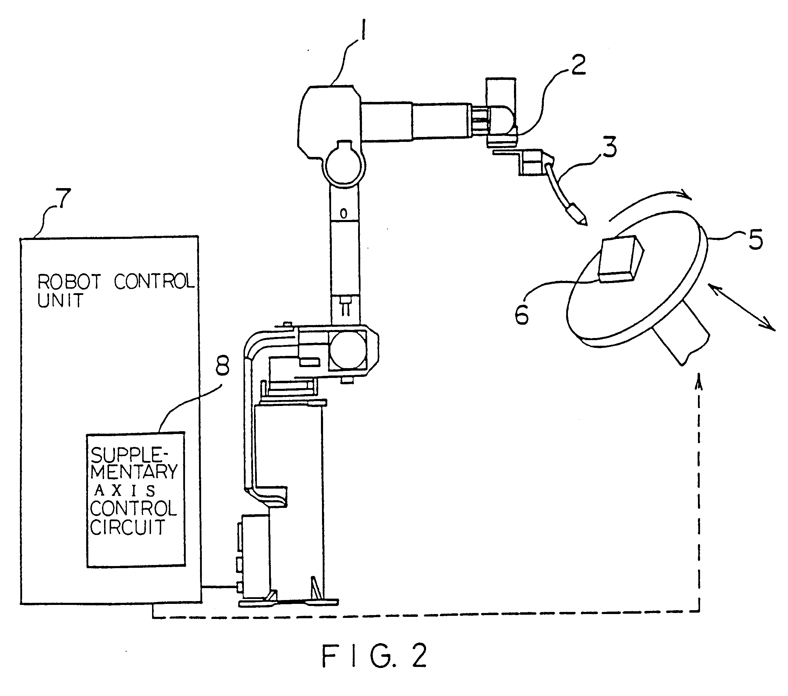

FIG. 2 is a configuration diagram of a robot system according to the embodiment of the invention, wherein a torch 3 is installed on the end of a wrist 2 of a robot 1, a table 5 is controlled by a supplementary axis control circuit 8 incorporated in a robot control unit 7, and the table 5 is controlled to rotate and more in a direction perpendicular to the rotation. A workpiece 6 is fixed on the table 5.

The table 5 is rotated or manually jog-run in a vertical direction through a control panel, not shown in the drawings, a microprocessor in the robot control unit 7 reads the coordinates of the table in the supplementary axis control circuit 8 and performs a control such that the positional relationship between the end of the torch 3 and the workpiece remains unchanged.

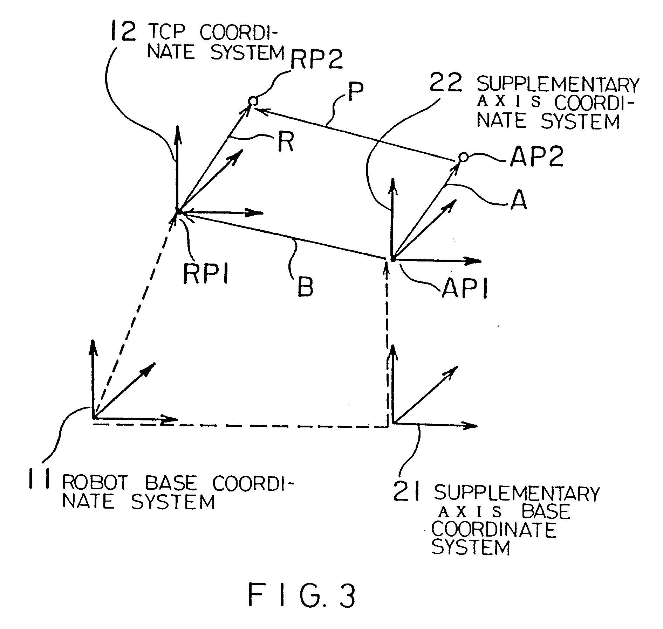

FIG. 3 shows the relationship between the tool centre point (TCP) and the coordinate system of the supplementary axis. A coordinate system of a robot tool centre point (TCP) 12 exists with respect to a base coordinate system 11 of the robot, and a supplementary axis base coordinate system 21 relating to those coordinate systems exists. This is the coordinate system of the table 5 in FIG. 2. Further, a coordinate system 22 of the supplementary axis exists with respect to the base coordinate system 21 of the supplementary axis. Here, matrix of a coordinate change from an origin AP1 of the coordinate system 22 of the supplementary axis to an origin RP1 of the coordinate system 12 of the TCP12 is taken as B.

The supplementary axis is manually jog-run to a point AP2 by a coordinate change matrix A. At this time, to ensure that the position of the TCP12 is not changed, it is necessary to control the TCP12 so that a coordinate change matrix R shown in the drawing satisfies the following formulas:$\text{R = B⁻¹AP}$
and$\text{P = B}$

A coordinate change matrix P is a coordinate change matrix from the point AP2 to a point RP2. Namely, the coordinate change matrix R is the coordinate change matrix that determines the movement of the TCP12.

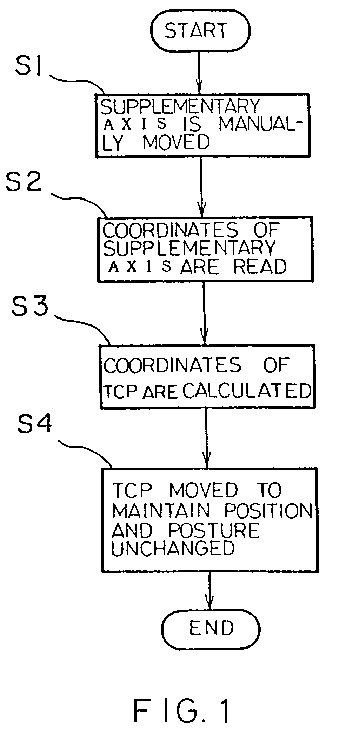

FIG. 1 is a flowchart of the method of controlling a robot with a supplementary axis according to the present invention. In the flowchart, a number that follows S indicates a step number.
[S1] The supplementary axis , i.e., the table 6, is manually jog-run.
[S2] The processor built in the robot control unit 7 reads the coordinates of the supplementary axis through the supplementrry axis control circuit 8.
[S3] The coordinates of the new point RP2 of the TCP12 are calculated from the coordinate system of the supplementary axis.
[S4] The TCP12 is moved to the point RP2.

Accordingly, when the supplementary axis such as a table is moved, the tool centre point (TCP) is automatically moved in accordance with the new position and posture of the supplementary axis such as a table, and this eliminates the need to move the robot or control the posture of the robot.

In the above description, the present invention is described in connection with a welding robot, but the invention may be applied in a similar way to other robots having tables or the like which are controlled through supplementary axes.

As described above, according to the present invention the robot is automatically adjusted to maintain a constant position and posture thereof by following new coordinates resulting from a manual feed of the supplementary axis. Therefore, even when the supplementary axis is moved, there is no need to control the position or posture of the robot, and thus the teaching efficiency is improved.

## Claims

1. A method of controlling a robot having a supplementary moving device which has a supplementary coordinate system with supplementary axes, the robot having a tool center point (TCP), the supplementary axes having a first position and posture and the tool center point having a second position and posture, there being a first coordinate change matrix (B) from the supplementary axes to the tool center point, the method comprising the steps of:
(a) manually moving the supplementary moving device, thus moving the supplementary axes (22); and,
(b) subsequently reading the resulting coordinate position of the supplementary axes; characterised by:
(c) determining the coordinates and the posture of the tool center point, such that the position and posture of the supplementary axes relative to the position and posture of the tool center point is the same before and after step (a), by the following equations:$\text{R = B⁻¹AP}$ and$\text{P = B,}$ where
B is the first coordinate change matrix,
B⁻¹ is the inverse matrix of the matrix B,
A is a second coordinate change matrix in accordance with the manual movement of the supplementary axes, and
R is a third coordinate change matrix in accordance with the required movement of the tool center point; and,
(d) moving the tool center point in accordance with the coordinate and the posture determined in step (c).

2. A method according to claim 1, wherein the robot has an end on which a welding torch is mounted, the welding torch having a position and posture, and wherein step (d) includes the substep of:
moving the welding torch, whereby the position and posture of the welding torch remain unchanged relative to the position and posture of the supplementary axes before and after step (a).

## Patentansprüche

1. Verfahren zum Steuern eines Roboters mit einem zusätzlichen Antrieb, der ein zusätzliches Koordinatensystem mit zusätzlichen Achsen aufweist, wobei der Roboter einen Werkzeugmittelpunkt (TCP) aufweist, die zusätzlichen Achsen eine erste Position und Haltung und der Werkzeugmittelpunkt eine zweite Position und Haltung besitzen, und wobei eine erste Koordinatenänderungsmatrix (B) von den zusätzlichen Achsen zum Werkzeugmittelpunkt vorgesehen ist, und das Verfahren folgende Schritte aufweist:
(a) der zusätzliche Antrieb wird von Hand bewegt und damit werden die zusätzlichen Achsen (22) bewegt; und
(b) anschließend wird die resultierende Koordinatenposition der zusätzlichen Achsen gelesen, gekennzeichnet durch:
(c) die Koordinaten und die Haltung des Werkzeugmittelpunktes werden bestimmt derart, daß die Position und Haltung der zusätzlichen Achsen relativ zu Position und Haltung des Werkzeugmittelpunktes die gleiche vor und nach dem Schritt (a) ist, indem man die folgenden Gleichungen benutzt:$\text{R = B⁻¹AP}$ und$\text{P = B,}$ wobei
B ist die erste Koordinatenänderungsmatrix,
B⁻¹ ist die inverse Matrix der Matrix B,
A ist eine zweite Koordinatenänderungsmatrix gemäß der manuellen Bewegung der zusätzlichen Achsen und
R ist eine dritte Koordinatenänderungsmatrix gemäß der erforderlichen Bewegung des Werkzeugmittelpunktes und
(d) der Werkzeugmittelpunkt wird gemäß dem in den Schritt (c) bestimmten Koordinaten und Haltung bewegt.

2. Verfahren nach Anspruch 1, bei dem der Roboter ein Ende aufweist, an dem eine Schweißflamme befestigt ist, die eine Position und Haltung besitzt, und bei dem der Schritt (d) folgenden Unterschritt aufweist:
die Schweißflamme wird bewegt, wodurch die Position und Haltung der Schweißflamme relativ zur Position und Haltung der zusätzlichen Achsen vor und nach dem Schritt (a) unverändert bleibt.

## Revendications

1. Procédé de commande d'un robot présentant un dispositif supplémentaire de déplacement qui comporte un système supplémentaire de coordonnées avec des axes supplémentaires, le robot présentant un point central d'outil (TCP), les axes supplémentaires présentant une première position et une première attitude, et le point central d'outil présentant une seconde position et une seconde attitude, tandis qu'il existe une première matrice (B) de changement de coordonnées entre les axes supplémentaires et le point central d'outil, le procédé comportant les étapes consistant à:
(a) déplacer manuellement le dispositif supplémentaire de déplacement, pour ainsi déplacer les axes supplémentaires (22); et
(b) lire ensuite la position obtenue pour les coordonnées des axes supplémentaires;
caractérisé en ce que:
(c) on détermine les coordonnées et l'attitude du point central d'outil, de telle sorte que la position et l'attitude des axes supplémentaires par rapport à la position et l'attitude du point central de l'outil soit la même avant et après l'étape (a), et ce par les équations suivantes:$\text{R = B⁻¹AP}$ et$\text{P = B,}$ où
B est la première matrice de changement de coordonnée,
B⁻¹ est la matrice inverse de la matrice B,
A est une seconde matrice de changement de coordonnées, qui correspond au déplacement manuel des axes supplémentaires, et
R est une troisième matrice de changement de coordonnées, qui correspond au déplacement requis du point central d'outil; et
(d) déplacer le point central d'outil en fonction des coordonnées et de l'attitude déterminées à l'étape (c).

2. Procédé selon la revendication 1, dans lequel le robot présente une extrémité sur laquelle est monté un brûleur de soudage, le brûleur de soudage présentant une position et une attitude, et dans lequel l'étape (d) comporte la sous-étape consistant à:
déplacer le brûleur de soudage, de sorte que la position et l'attitude de la torche de soudage restent inchangées par rapport à la position et à l'attitude des axes supplémentaires avant et après l'étape (a).
